POOR
QUALITY

Europäisches Patentamt

(19) European Patent Office

Office européen des brevets

(11) Veröffentlichungsnummer: **0 129 780**
**B1**

(12) **EUROPÄISCHE PATENTSCHRIFT**

(45) Veröffentlichungstag der Patentschrift:
09.03.88

(51) Int. Cl.⁴: **F 16 F 13/00, B 60 K 5/12**

(21) Anmeldenummer: 84106776.2

(22) Anmeldetag: 14.06.84

(54) Entkopplungsmembran für Zweikammer-Motorlager.

(30) Priorität: 28.06.83 DE 3323178

(43) Veröffentlichungstag der Anmeldung:
02.01.85 Patentblatt 85/1

(45) Bekanntmachung des Hinweises auf die Patenterteilung:
09.03.88 Patentblatt 88/10

(84) Benannte Vertragsstaaten:
DE FR GB IT SE

(56) Entgegenhaltungen:
EP - A - 0 006 819
EP - A - 0 042 909
EP - A - 0 110 197
FR - A - 1 251 719
FR - A - 2 496 208
GB - A - 825 668

(73) Patentinhaber: METZELER KAUTSCHUK GMBH,
Gneisenaustrasse 15, D-8000 München 50 (DE)

(72) Erfinder: Hofmann, Manfred, Gerhard von
Dietz-Strasse 15, D-6257 Hünfelden (DE)
Erfinder: Klöckner, Karl-Heinz, Steinstrasse 5A,
D-5415 Niederwerth (DE)

(74) Vertreter: Michelis, Theodor, Dipl.-Ing.,
Gneisenaustrasse 15, D-8000 München 50 (DE)

**Beschreibung**

Die Erfindung betrifft eine Entkopplungsmembran für Zweikammer-Motorlager mit hydraulischer Dämpfung, insbesondere für Kraftfahrzeuge, bestehend aus einem kreisringförmigen Gummikörper und einer zentralen, metallischen Kreisscheibe als Tilgermasse, die fest haftend miteinander verbunden und im oberen Bereich der oberen Flüssigkeitskammer zur Abtrennung einer Membrankammer flüssigkeitsdicht befestigt ist.

Eine derartige Entkopplungsmembran – jedoch durchgehend aus elastomerem Material – ist aus der DE-A 3 024 091 bekannt.

In einem älteren Vorschlag (EP-A 110 197 veröffentlicht am 13.6.1984) ist eine Entkopplungsmembran beschrieben, die entsprechend dem vorliegenden Gegenstand aus einem sehr weichen kreisringförmigen Gummikörper und einer zentralen metallischen Tilgermasse besteht. Mit einer derartigen Entkopplungsmembran soll erreicht werden, dass in einem hydraulisch gedämpften Motorlager eine Entkoppelung von kleinen Amplituden in der Grössenordnung von etwa 0,1 mm sicher gewährleistet ist, um eine optimale Isolierung sowohl des akustischen Verhaltens als auch der eingeleiteten Schwingungen sicherzustellen.

Bei der bisher üblichen Ausführung des kreisringförmigen Gummikörpers als sehr weiche, ebene Ringplatte oder als gewellte Ringscheibe besteht jedoch die Gefahr, dass die metallische Tilgermasse bei grösseren Auslenkungen gegen die obere Stirnwand des Lagers schlägt und damit unerwünschte Geräusche erzeugt. Darüber hinaus ist der auftretende Schwingungsweg der Tilgermasse bei der vorstehenden Ausbildung nur schwer zu erfassen oder genau zu definieren.

Der vorliegenden Erfindung liegt daher die Aufgabe zugrunde, eine Entkopplungsmembran zu schaffen, die praktisch eine integrierte Wegbegrenzung für die vertikalen Schwingungsbewegungen der Tilgermasse aufweist, um somit eine genau definierte maximale Auslenkung zu erreichen und einstellen zu können.

Zur Lösung dieser Aufgabe ist erfindungsgemäss vorgesehen, dass der kreisringförmige Gummikörper auf seiner Ober- und Unterseite jeweils zwei konzentrische, jeweils zur Oberfläche hin einander konisch zugeneigte Ringnuten aufweist, die sich angenähert bis zur horizontalen Mittelebene der Membran erstrecken.

Durch die Anordnung derartiger konischer Ringnuten ist zunächst für eine vorgebbare Wegstrecke eine relativ freie vertikale Beweglichkeit der Tilgermasse ermöglicht, während anschliessend die Nutflanken zweier einander diametral gegenüberliegender Nuten auf Ober- und Unterseite der Membran aufeinandertreffen und damit – abgesehen von der bleibenden Elastizität des massiven Gummikörpers – einer weiteren vertikalen Bewegung der Tilgermasse entgegenwirken.

Zweckmässige Ausgestaltungen der Erfindung sind in den Unteransprüchen aufgeführt.

Anhand einer schematischen Zeichnung sind Aufbau und Wirkungsweise eines Ausführungsbeispiels nach der Erfindung näher erläutert. Dabei zeigen:

Fig. 1 einen Querschnitt durch die Gesamtanordnung eines Zweikammer-Motorlagers,

Fig. 2 einen Querschnitt durch eine Hälfte der Entkopplungsmembran in vergrössertem Massstab und

Fig. 3 einen Querschnitt entsprechend Fig. 2 nach Auslenkung der Tilgermasse in ihre obere Endlage.

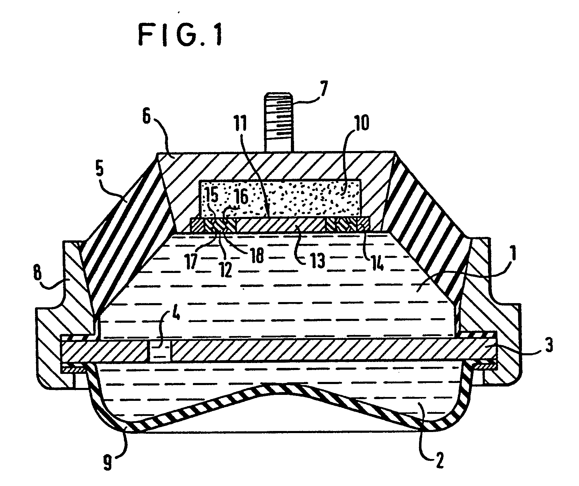

Wie aus Fig. 1 zu ersehen ist, besteht das Zweikammer-Motorlager im wesentlichen aus einer oberen, motorseitigen Kammer 1 und einer unteren Kammer 2, die mit einer hydraulischen Flüssigkeit gefüllt und durch eine elastisch gelagerte Zwischenplatte 3 mit einer Drosselöffnung 4 voneinander getrennt sind. Die obere Kammer 1 wird von einer starkwandigen, hohlkegelförmigen Kammerwandung 5 aus gummielastischem Material gebildet, die an der oberen Stirnseite von der Motorlagerplatte 6 mit einem aufgesetzten Gewindebolzen 7 abgeschlossen und am unteren Aussenumfang mit dem ringförmigen Widerlager 8 haftend verbunden ist. Die untere Kammer 2 wird von einer beispielsweisen tassenförmigen Kammerwandung 9 aus ebenfalls gummielastischem Material gebildet.

Auf der Unterseite der Motorlagerplatte 6 ist ein zylindrischer Hohlraum 10 als Membrankammer eingelassen, der zur oberen Kammer 1 durch eine Entkopplungsmembran 11 abgeschlossen ist. Diese Entkopplungsmembran 11 besteht aus einem kreisförmigen Gummikörper 12 und einer zentralen metallischen Tilgermasse 13, die fest haftend miteinander verbunden sind. Am Aussenumfang ist der Gummikörper 12 von einem Metallring 14 zur Halterung und Festlegung in der Motor-Lagerplatte 6 umschlossen.

Erfindungsgemäss weist nunmehr der Gummikörper 12 auf der Oberseite zwei konisch zueinander geneigte Ringnuten 15 und 16 und auf der Unterseite zwei symmetrisch dazu angeordnete Ringnuten 17 und 18 auf.

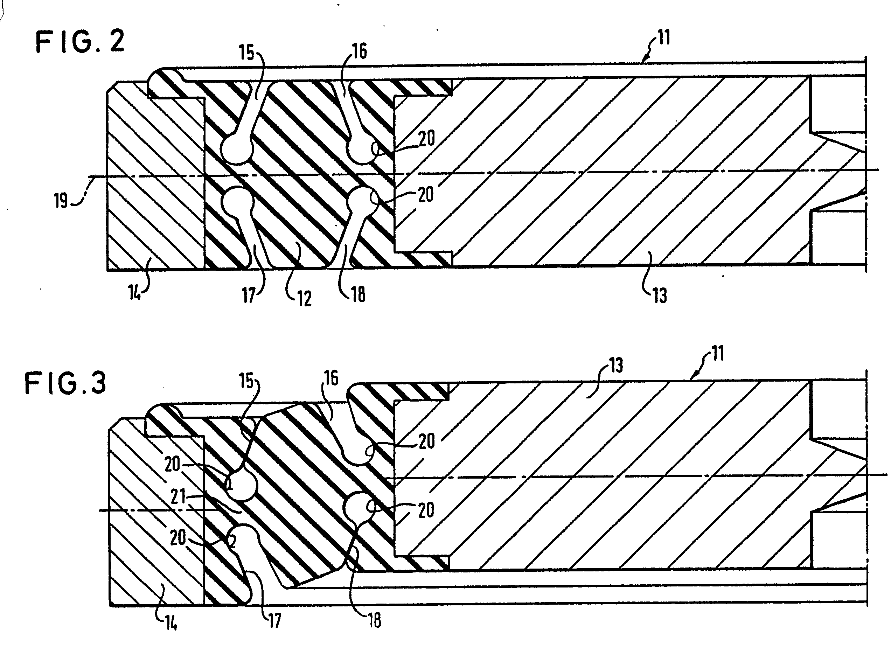

Wie im einzelnen aus dem Querschnitt im vergrösserten Massstab durch die linke Hälfte der Entkopplungsmembran 11 nach Fig. 2 zu ersehen ist, sind die beiden zur Mittelebene 19 einander symmetrisch gegenüberliegenden äusseren Nuten 15 und 17 im Winkel von etwa 20° nach innen und die beiden innenliegenden Nuten 16 und 18 im gleichen Winkel nach aussen geneigt. Je nach gewünschter zulässiger Auslenkung der Tilgermasse 13 kann die Neigung dieser Nuten 15 bis 18 zweckmässigerweise im Bereich von 15 bis 30° liegen. Die Ringnuten 15 bis 18 sind dabei jeweils am Nutgrund auf kreisförmigen Querschnitt 20 erweitert, um eine grössere Beweglichkeit in vertikaler Richtung zu gewährleisten. Das Verhältnis von Höhe zu Breite dieser Ringnuten sollte etwa 3:1 bis 4:1 betragen, wodurch ebenfalls die Grösse der zulässigen Auslenkung festgelegt werden kann.

Die Funktionsweise dieser Ringnuten sei nunmehr in Fig. 3 erläutert. Bei Anregung der schwingend gelagerten Tilgermasse 13 durch die Erregerfrequenz gerät diese in Bewegung und bewirkt dadurch ein Verkanten des Gummikörpers 12. Bei der in der Figur dargestellten Bewegung der Tilgermasse 13 schliessen sich nach einer vorgegebenen Wegstrecke die einander diagonal gegenüberliegenden konischen Ringspalte 15 und 18, wobei deren Flanken weich anstossen. Durch dieses Schliessen der Nuten und dem dadurch bedingten Aneinanderstossen benachbarter Materialbereiche des Gummikörpers ergibt sich somit wegen der relativ geringen auf die Tilgermasse 13 einwirkenden Kräfte eine eindeutige Begrenzung des vertikalen Weges der Tilgermasse 13. Damit kann also eine definierte Wegbegrenzung erreicht und ein Anschlagen der Tilgermasse 13 an die obere Stirnwand der Membrankammer verhindert werden.

In entsprechender Weise würden sich bei einer Bewegung der Tilgermasse nach unten die jetzt noch geöffneten Ringnuten 16 und 17 verschliessen und damit eine definierte Wegbegrenzung nach unten bewirken.

Für eine genau definierte Wegbegrenzung, d. h. zu Minimierung einer möglichen Restelastizität des massiven Gummikörpers bei geschlossenen Nuten kann jetzt auch eine Gummiqualität höherer Shore-Härte verwendet werden, da die freie Beweglichkeit der Tilgermasse 13 wegen der relativ tiefen Nuteinschnitte nur noch durch die Stärke des zwischen einander gegenüberliegenden Nutgrunden 20 vorhandenen Materialbereich 21 bestimmt ist.

## Patentansprüche

1. Entkopplungsmembran für Zweikammer-Motorlager mit hydraulischer Dämpfung, insbesondere für Kraftfahrzeuge, bestehend aus einem kreisringförmigen Gummikörper (12) und einer zentralen, metallischen Kreisscheibe als Tilgermasse (13), die fest haftend miteinander verbunden und im oberen Bereich der oberen Flüssigkeitskammer zur Abtrennung einer Membrankammer flüssigkeitsdicht befestigt ist, dadurch gekennzeichnet, dass der kreisringförmige Gummikörper (12) auf seiner Ober- und seiner Unterseite jeweils zwei konzentrische zur Oberfläche hin einander konisch zugeneigte Ringnuten (15, 16; 17, 18) aufweist, die sich angenähert bis zur horizontalen Mittelebene (19) der Membran (11) erstrecken.

2. Entkopplungsmembran nach Anspruch 1, dadurch gekennzeichnet, dass die Ringnuten (15, 16; 17, 18) am Nutgrund eine kreisringförmige Erweiterung (20) aufweisen.

3. Membran nach Anspruch 1, dadurch gekennzeichnet, dass die Ringnuten (15, 16; 17, 18) von Ober- und Unterseite symmetrisch zur Mittelebene (19) verlaufen.

4. Entkopplungsmembran nach Anspruch 1 bis 3, dadurch gekennzeichnet, dass die Konizität der Ringnuten (15, 16; 17, 18) 15 bis 30°, insbesondere 20 bis 25° beträgt.

5. Entkopplungsmembran nach Anspruch 1 bis 4, dadurch gekennzeichnet, dass das Verhältnis von Höhe zu Breite der Ringnuten (15, 16; 17, 18) etwa 3:1 bis 4:1 beträgt.

6. Entkopplungsmembran nach Anspruch 1 bis 5, dadurch gekennzeichnet, dass der Gummikörper (12) von einem fest haftend verbundenen Metallring (14) umfasst ist.

## Claims

1. Decoupling membrane for twin-chamber motor bearing with hydraulic damping, in particular for motor vehicles, consisting of an annular rubber body (12) and a central, metallic circular plate as an absorbing mass (13) which are firmly bonded to each other and fixed in a fluid-tight manner in the upper region of an upper fluid chamber to separate off a membrane chamber, characterised in that the annular rubber body (12) comprises two concentric ring grooves (15, 16; 17, 18) conically inclined to each other up to the surface on each of its upper and lower sides, which ring grooves extend nearly to the horizontal central plane (19) of the membrane (11).

2. Decoupling membrane according to claim 1, characterised in that the ring grooves (15, 16; 17, 18) comprise an annular extension (20) at the groove base.

3. Membrane according to claim 1, characterised in that the ring grooves (15, 16; 17, 18) run from the upper and lower sides symmetrically to the central plane (19).

4. Decoupling membrane according to claims 1 to 3, characterised in that the conical tapering of the ring grooves (15, 16; 17, 18) is from 15 to 30°, in particular 20 to 25°.

5. Decoupling membrane according to claims 1 to 4 characterised in that the ratio of height to width of the ring grooves (15, 16; 17, 18) is approximately 3:1 to 4:1.

6. Decoupling membrane according to claims 1 to 5, characterised in that the rubber body (12) is surrounded by a firmly bonded connected metal ring (14).

## Revendications

1. Membrane de découplage pour des supports de moteur à deux chambres à amortissement hydraulique, notamment pour des véhicules automobiles, constituée par un corps en caoutchouc (12) en forme d'anneau circulaire et un disque circulaire métallique central constituant une masse d'amortissement (13), ce corps et ce disque étant reliés fermement entre eux par adhérence et étant fixés, d'une manière étanche aux liquides, dans la partie supérieure de la chambre supérieure logeant le liquide, pour établir une séparation pour une chambre à membrane, caractérisée par le fait que le corps en caoutchouc en forme d'anneau circulaire (12) comporte, sur sa face supérieure et sur sa face inférieure, respectivement deux gorges annulaires (15, 16; 17, 18), qui sont inclinées les unes par rapport aux autres selon une disposition conique, vers la surface, et s'étendent en se rapprochant du plan médian horizontal (19) de la membrane (11).

2. Membrane de découplage selon la revendication 1, caractérisée en ce que les gorges annulaires (15, 16; 17, 18) comportent, dans leur fond, un élargissement (20) en forme d'anneau circulaire.

3. Membrane suivant la revendication 1, caractérisée par le fait que les gorges annulaires (15, 16; 17, 18) s'étendent symétriquement par rapport au plan médian (19), à partir de la face supérieure et de la face inférieure.

4. Membrane de découplage suivant les revendications 1 à 3, caractérisée par le fait que l'angle de conicité des gorges annulaires (15, 16; 17, 18) est compris entre 15 et 30° et notamment entre 20 et 25°.

5. Membrane de découplage suivant les revendications 1 à 4, caractérisée par le fait que le rapport de la hauteur à la largeur des gorges annulaires (15, 16; 17, 18) est compris entre environ 3:1 et 4:1.

6. Membrane de découplage suivant les revendications 1 à 5, caractérisée par le fait que le corps en caoutchouc (12) est entouré par une bague métallique (14) fixée solidement par adhérence à ce corps.

# FIG.1

FIG. 2

FIG. 3